(19) Europäisches Patentamt
European Patent Office
Office européen des brevets

(11) **EP 3 195 969 B1**

(12) **FASCICULE DE BREVET EUROPEEN**

(45) Date de publication et mention
de la délivrance du brevet:
**29.08.2018 Bulletin 2018/35**

(51) Int Cl.:
***B23C 3/12*** *(2006.01)*    ***B23C 5/10*** *(2006.01)*

(21) Numéro de dépôt: **17150622.3**

(22) Date de dépôt: **09.01.2017**

(54) **MÉTHODE DE SÉLECTION D'UNE FRAISE POUR USINAGE LATÉRAL**

AUSWAHLMETHODE EINER FRÄSE FÜR DIE LATERALE BEARBEITUNG VON WERKSTÜCKEN

METHOD FOR SELECTING A CUTTER FOR LATERAL MACHINING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.01.2016 BE 201605045**

(43) Date de publication de la demande:
**26.07.2017 Bulletin 2017/30**

(73) Titulaire: **Safran Aero Boosters SA
4041 Herstal (BE)**

(72) Inventeur: **ENGLEBERT, Eric
4530 Villers-Le-Bouillet (BE)**

(74) Mandataire: **Gevers Patents
Intellectual Property House
Holidaystraat 5
1831 Diegem (BE)**

(56) Documents cités:
**EP-A1- 2 100 683    US-A1- 2011 217 132**

## Description

### Domaine technique

Selon un premier aspect, la présente invention concerne une méthode de sélection d'une fraise (d'usinage) en fonction d'une pièce à usiner. Selon un deuxième aspect, la présente invention concerne un arrangement de fraisage comprenant une fraise pour un fraisage latéral et une pièce à fraiser.

### Art antérieur

Une fraise connue de l'état de la technique comporte une pluralité d'arêtes de coupe. La rotation de la fraise permet un usinage d'une pièce grâce au contact avec les arêtes. Dans le cas d'un fraisage latéral d'une pièce, le nombre d'arêtes de la fraise en prise avec la pièce varie chaque fois qu'une arête arrive en contact ou qu'une arête quitte le contact avec la pièce, ce qui provoque une variation des efforts de coupe. Le document US 2011/0217132 A1 présente un arrangement de fraisage selon le préambule de la revendication 6.

### Résumé de l'invention

Selon un premier aspect, un des buts de l'invention est de fournir une méthode permettant de déterminer une fraise en fonction d'une pièce à usiner telle que l'effort de coupe soit constant lors de l'usinage de la pièce. A cet effet, l'invention propose une méthode de détermination d'une fraise en fonction d'une pièce à usiner, la fraise comprenant:

- un cylindre de section circulaire de rayon R et ayant un axe de révolution,
- une pluralité d'arêtes de coupe en nombre M, disposées selon des courbes hélicoïdales parallèles s'étendant sur une surface extérieure du cylindre, les arêtes définissant avec la direction de l'axe du cylindre un angle d'hélice β, les arêtes formant des angles α constants entre elles dans un plan perpendiculaire à l'axe de telle sorte que α=2π/M,

la méthode comprenant les étapes de:

- fournir une pièce ayant un côté,
- déterminer une hauteur h du côté, mesurée parallèlement à l'axe de révolution de la fraise,
  - sélectionner une fraise ayant des valeurs de α, β et R de telle sorte que l'égalité suivante soit satisfaite:

$$\frac{tg(\beta)}{R\,\alpha} = \frac{\text{nombre entier}}{h}$$

Selon différents modes de réalisation de l'invention, qui peuvent être pris ensemble ou séparément :

- le nombre d'arêtes de coupe de la fraise est compris entre 1 et 10,
- le nombre d'arêtes de coupe de la fraise est compris entre 2 et 6,
- l'angle d'hélice β est compris entre 10° et 80°,
- l'angle d'hélice β est compris entre 20° et 70°.

Selon un deuxième aspect, l'invention propose un arrangement de fraisage comprenant une fraise pour fraisage latéral et une pièce à fraiser, ladite fraise comprenant:

- un cylindre de section circulaire de rayon R et ayant un axe de révolution,
- une pluralité d'arêtes de coupe en nombre M, disposées selon des courbes hélicoïdales parallèles s'étendant sur une surface extérieure du cylindre, les arêtes définissant avec la direction de l'axe du cylindre un angle d'hélice β, les arêtes formant des angles α constants entre elles dans un plan perpendiculaire à l'axe de telle sorte que α=2π/M,

ladite pièce (4) présentant à ladite fraise (1) un côté (6) ayant une hauteur h mesurée parallèlement à l'axe (5) du cylindre (2) de la fraise (1),
caractérisé en ce que les valeurs de α, β et R satisfont à l'égalité suivante:

$$\frac{tg(\beta)}{R\,\alpha} = \frac{\text{nombre entier}}{h}$$

Il est possible de montrer que ces valeurs de α, β et R par rapport à h sont telles que chaque fois qu'une arête arrive en contact avec la pièce, une autre quitte le contact avec la pièce. L'effort de coupe reste donc constant durant le fraisage.

Dans l'ensemble de ce document, les angles sont donnés en radians sauf s'ils sont explicitement indiqués en degrés (°).

Selon différents modes de réalisation de l'invention, qui peuvent être pris ensemble ou séparément :

- le nombre d'arêtes de coupe de la fraise est compris entre 1 et 10,
- le nombre d'arêtes de coupe de la fraise est compris entre 2 et 6,
- l'angle d'hélice β est compris entre 10° et 80°,
- l'angle d'hélice β est compris entre 20° et 70°.

Préférentiellement, le côté présenté par la pièce à la fraise est essentiellement plan.

De façon préférentielle, le côté présenté par la pièce à la fraise est parallèle à l'axe.

## Brève description des figures

D'autres caractéristiques et avantages de l'invention apparaîtront à la lecture de la description détaillée qui suit pour la compréhension de laquelle on se reportera aux figures annexées parmi lesquelles :

- la figure 1 est une vue en perspective d'une partie d'une fraise de l'arrangement de l'invention,
- la figure 2 schématise un arrangement de fraisage selon l'invention, et
- la figure 3 schématise une surface de la fraise comprise dans l'arrangement de fraisage, mise à plat sur un plan, ainsi que la pièce à fraiser.

## Modes de réalisation préférés de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

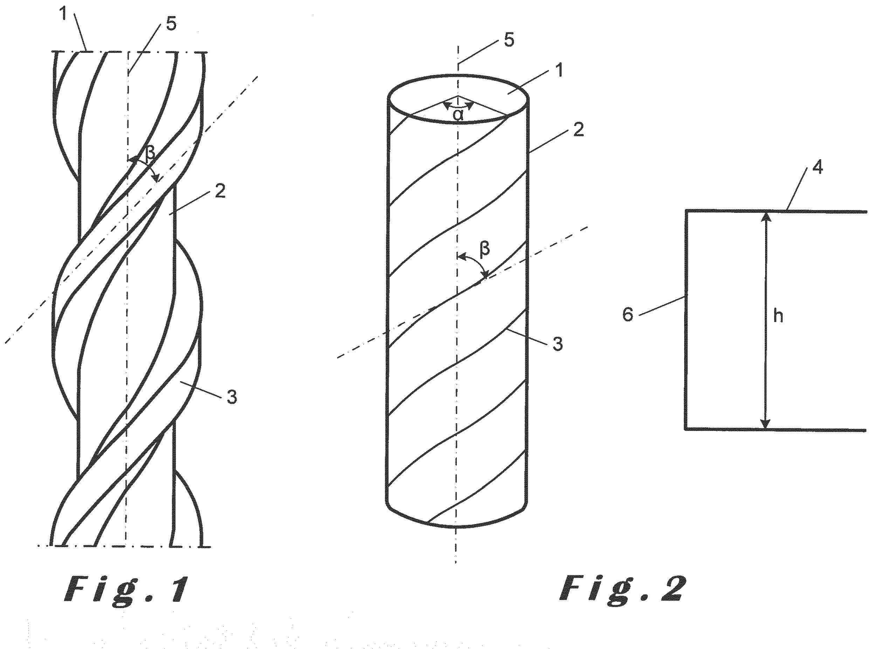

La figure 1 illustre une fraise 1 selon l'invention, qui comprend un cylindre circulaire droit 2 ayant un axe de révolution 5 et une surface extérieure, et M arrêtes de coupe 3 disposées selon des courbes hélicoïdales parallèles s'étendant sur la surface extérieure du cylindre 2.

Dans la figure 1, M est égal à 2. M est un nombre entier. M est préférentiellement compris entre 1 et 10. M est plus préférentiellement compris entre 2 et 6. Dans le présent document, l'expression "A est compris entre B et C" signifie que A peut prendre les valeurs comprises entre B et C, B et C y compris.

Un angle d'hélice, qui est l'angle entre la tangente à une arrête 3 et la direction de l'axe 5 du cylindre est référencé $\beta$. L'angle d'hélice, $\beta$, est préférentiellement entre 10° et 80°. L'angle d'hélice, $\beta$, est plus préférentiellement entre 20° et 70°.

La figure 2 schématise un arrangement de fraisage selon l'invention comprenant la fraise 1 et la pièce 4 destinée à être usinée par la fraise 1. La fraise 1 est schématisée avec le cylindre circulaire droit 2 et les M arrêtes de coupe 3. Les arêtes 3 ont un angle $\alpha$ constant entre elles, $\alpha$ étant pris sur l'axe 5, dans un plan perpendiculaire à l'axe. $\alpha$ est relié au nombre M d'arêtes 3 de la fraise par l'égalité :

$$\alpha = \frac{2\pi}{M}$$

Un rayon d'une section du cylindre 1 perpendiculaire à l'axe 5 est référencé R.

La pièce 4 destinée à être usinée par la fraise 1, en mettant en contact la fraise 1 avec la pièce 4 sur un côté 6 de la pièce 4. Ce côté 6 de la pièce 4 en contact avec la fraise 1 est préférentiellement plan et parallèle à l'axe 5. Ce côté 6 de la pièce 4 a une hauteur h mesurée parallèlement à l'axe 5.

La hauteur de la fraise 1, mesurée parallèlement à l'axe 5, est supérieure à h.

La fraise 1 peut être montée sur une broche (non-montrée) à l'aide d'une douille ou d'un mandrin (montré). La broche entraine la rotation de la fraise 1 autour de l'axe 5.

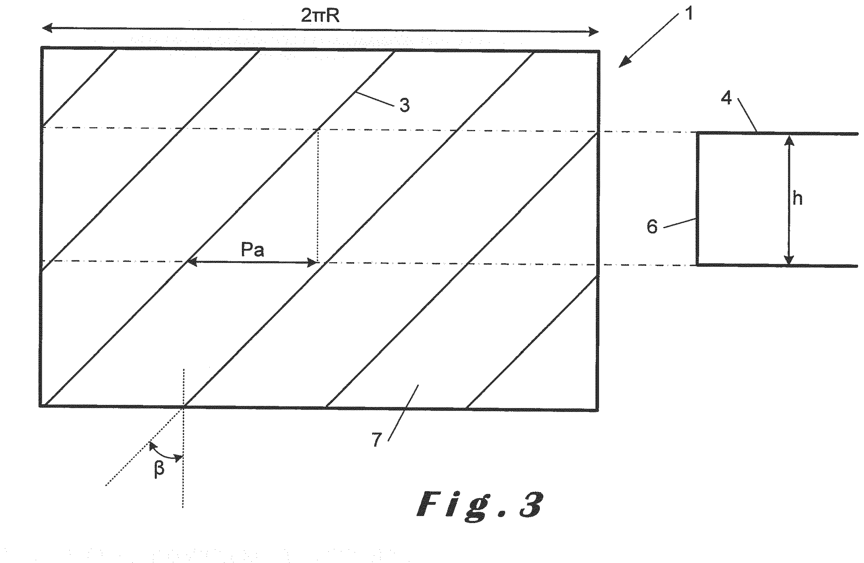

La figure 3 schématise une surface de la fraise 1 mise à plat sur un plan, de façon à ce que la surface extérieure du cylindre 2 devienne un rectangle 7. Le périmètre d'une section du cylindre 2, égal à $2\pi R$, correspond à la longueur d'un côté du rectangle 7. La longueur Pa d'un arc de cercle balayé par une arête 3 sur la hauteur h est telle que

$$\tan(\beta) = \frac{Pa}{h}$$

L'angle y au centre que fait cet arc de cercle balayé par une arête 3 sur la hauteur h vaut

$$\gamma = \frac{Pa}{R}$$

Le nombre N d'arêtes 3 en prise avec la pièce 4 vaut

$$N = \frac{\gamma}{\alpha} + 1$$

La condition pour qu'un nombre constant d'arêtes soit en prise avec la pièce 4 pendant la rotation autour de l'axe 5 est donc

$$\frac{\gamma}{\alpha} = \text{nombre entier}$$

$$\Rightarrow \frac{h \, tg(\beta)}{R \, \alpha} = \text{nombre entier}$$

L'invention propose une méthode consistant à choisir les caractéristiques $\alpha$, $\beta$ et R de la fraise 1 en fonction de la hauteur h de la pièce 4 pour que cette égalité soit satisfaite, de façon à ce qu'un nombre constant d'arêtes soit en prise avec la pièce 4 pendant la rotation de la fraise 1 autour de l'axe 5.

En d'autres termes, l'invention se rapporte à un arrangement de fraisage comprenant une fraise 1 et une pièce 4, destiné à fraiser latéralement une pièce 4 d'une hauteur déterminée, les caractéristiques de la fraise 1 étant adaptée pour que l'effort de la fraise 1 sur la pièce 4 soit constant au cours du temps.

Les numéros de référence dans les revendications ne limitent pas leur portée.

**Revendications**

1. Méthode de sélection d'une fraise (1) pour usinage latéral à partir d'une pièce (4) à usiner, la fraise (1) comprenant:

   • un cylindre (2) de section circulaire de rayon R et ayant un axe de révolution (5),
   • une pluralité d'arêtes (3) de coupe en nombre M, disposées selon des courbes hélicoïdales parallèles s'étendant sur une surface extérieure du cylindre (2), les arêtes (3) définissant avec la direction de l'axe (5) du cylindre un angle d'hélice β, les arêtes (3) formant des angles α constants entre elles dans un plan perpendiculaire à l'axe (5) de telle sorte que α=2π/M, la méthode comprenant les étapes de:

   • fournir une pièce (4) ayant un côté (6),
   • déterminer une hauteur h du côté (6) mesurée parallèlement à l'axe de révolution (5) de la fraise (1),
   • sélectionner une fraise (1) ayant des valeurs de α, β et R de telle sorte que l'égalité suivante soit satisfaite:

$$\frac{tg(\beta)}{R\,\alpha} = \frac{nombre\ entier}{h}$$

2. Méthode selon la revendication 1, dans laquelle le nombre M d'arêtes (3) de coupe de la fraise (1) est compris entre 1 et 10.

3. Méthode selon la revendication 2, dans laquelle le nombre M d'arêtes (3) de coupe de la fraise (1) est compris entre 2 et 6.

4. Méthode selon l'une quelconque des revendications 1 à 3, dans laquelle l'angle d'hélice β est compris entre 10° et 80°.

5. Méthode selon la revendication 4, dans laquelle l'angle d'hélice β est compris entre 20° et 70°.

6. Arrangement de fraisage comprenant une fraise (1) et une pièce (4) à fraiser,
   ladite fraise (1) étant apte à fraiser latéralement ladite pièce (4) et comprenant:

   • un cylindre (2) de section circulaire de rayon R et ayant un axe de révolution (5),
   • une pluralité d'arêtes (3) de coupe en nombre M, disposées selon des courbes hélicoïdales parallèles s'étendant sur une surface extérieure du cylindre (2), les arêtes (3) définissant avec la direction de l'axe de révolution (5) du cylindre un angle d'hélice β, les arêtes (3) formant des angles α constants entre elles dans un plan perpendiculaire à l'axe de révolution (5) de telle sorte que α=2π/M, ladite pièce (4) ayant un côté (6) de hauteur h mesurée parallèlement à l'axe de révolution (5) du cylindre (2) de la fraise (1),

   ledit arrangement étant **caractérisé en ce que** les valeurs de α, β et R satisfont à l'égalité suivante:

$$\frac{tg(\beta)}{R\,\alpha} = \frac{nombre\ entier}{h}$$

7. Arrangement de fraisage selon la revendication 6, dans laquelle le nombre M d'arêtes (3) de coupe de la fraise (1) est compris entre 1 et 10.

8. Arrangement de fraisage selon la revendication 7, dans laquelle le nombre M d'arêtes (3) de coupe de la fraise (1) est compris entre 2 et 6.

9. Arrangement de fraisage selon l'une quelconque des revendications 6 à 8, dans laquelle l'angle d'hélice β est compris entre 10° et 80°.

10. Arrangement de fraisage selon la revendication 9, dans laquelle l'angle d'hélice β est compris entre 20° et 70°.

11. Arrangement de fraisage selon l'une quelconque des revendication 6 à 10, dans lequel le côté (6) de la pièce (4) est essentiellement plan.

12. Arrangement de fraisage selon l'une quelconque des revendications 6 à 11, dans lequel le côté (6) de la pièce (4) est parallèle à l'axe (5).

**Patentansprüche**

1. Verfahren zum Auswählen einer Fräse (1) zum seitlichen Spanen anhand eines Werkstücks (4), das zerspant werden soll, wobei die Fräse (1) umfasst:

   - einen Zylinder (2) mit kreisrundem Querschnitt mit Radius R und eine Drehachse (5) aufweisend,
   - eine Vielzahl von Schneidkanten (3) in Anzahl M, die entlang von parallelen spiralförmigen Bögen angeordnet sind, welche sich auf einer Außenfläche des Zylinders (2) erstrecken, wobei die Kanten (3) mit der Richtung der Achse (5) des Zylinders einen Spiralwinkel β definieren, wobei die Kanten (3) zwischen sich in einer Ebene senkrecht zur Achse (5) konstante Winkel α bilden, derart, dass α = 2π/M,

wobei das Verfahren die Schritte umfasst des:

- Bereitstellens eines Werkstücks (4), das eine Seite (6) aufweist,
- Bestimmens einer Höhe h der Seite (6), parallel zur Drehachse (5) der Fräse (1) gemessen,
- Auswählens einer Fräse (1), die Werte α, β und R derart aufweist, dass die folgende Gleichung erfüllt ist:

$$\frac{tg(\beta)}{R\,\alpha} = \frac{ganze\ Zahl}{h}.$$

2. Verfahren nach Anspruch 1, wobei die Anzahl M an Schneidkanten (3) der Fräse (1) im Bereich zwischen 1 und 10 beträgt.

3. Verfahren nach Anspruch 2, wobei die Anzahl M an Schneidkanten (3) der Fräse (1) im Bereich zwischen 2 und 6 beträgt.

4. Verfahren nach einem der Ansprüche 1 bis 3, wobei der Spiralwinkel β im Bereich zwischen 10° und 80° beträgt.

5. Verfahren nach Anspruch 4, wobei der Spiralwinkel β im Bereich zwischen 20° und 70° beträgt.

6. Fräsanordnung, die eine Fräse (1) und ein Werkstück (4) umfasst, welches gefräst werden soll, wobei die Fräse (1) in der Lage ist, das Werkstück (4) seitlich zu fräsen, und umfasst:

- einen Zylinder (2) mit kreisrundem Querschnitt mit Radius R und eine Drehachse (5) aufweisend,
- eine Vielzahl von Schneidkanten (3) in Anzahl M, die entlang von parallelen spiralförmigen Bögen angeordnet sind, welche sich auf einer Außenfläche des Zylinders (2) erstrecken, wobei die Kanten (3) zur Richtung der Drehachse (5) des Zylinders einen Spiralwinkel β definieren, wobei die Kanten (3) zwischen sich in einer Ebene senkrecht zur Drehachse (5) konstante Winkel α bilden, derart, dass α = 2π/M,

wobei das Werkstück (4) eine Seite (6) mit Höhe h aufweist, parallel zur Drehachse (5) des Zylinders (2) der Fräse (1) gemessen,
wobei die Anordnung **dadurch gekennzeichnet ist,**

**dass** die Werte α, β und R die folgende Gleichung erfüllen:

$$\frac{tg(\beta)}{R\,\alpha} = \frac{ganze\ Zahl}{h}.$$

7. Fräsanordnung nach Anspruch 6, wobei die Anzahl M an Schneidkanten (3) der Fräse (1) im Bereich zwischen 1 und 10 beträgt.

8. Fräsanordnung nach Anspruch 7, wobei die Anzahl M an Schneidkanten (3) der Fräse (1) im Bereich zwischen 2 und 6 beträgt.

9. Fräsanordnung nach einem der Ansprüche 6 bis 8, wobei der Spiralwinkel β im Bereich zwischen 10° und 80° beträgt.

10. Fräsanordnung nach Anspruch 9, wobei der Spiralwinkel β im Bereich zwischen 20° und 70° beträgt.

11. Fräsanordnung nach einem der Ansprüche 6 bis 10, wobei die Seite (6) des Werkstücks (4) im Wesentlichen eben ist.

12. Fräsanordnung nach einem der Ansprüche 6 bis 11, wobei die Seite (6) des Werkstücks (4) zur Achse (5) parallel ist.

**Claims**

1. Method for selecting a milling cutter (1) for lateral machining on the basis of a part (4) to be machined, the milling cutter (1) comprising:

• a cylinder (2) having a circular cross section of radius R and having an axis of rotation (5),
• a plurality of cutting edges (3) in a number M, arranged along parallel helical lines extending along an outer surface of the cylinder (2), the edges (3) defining, together with the direction of the axis (5) of the cylinder, a helix angle β, the edges (3) enclosing constant angles α in a plane that is perpendicular to the axis (5) such that α=2π/M,

the method comprising the steps of:

• providing a part (4) having a side (6),
• determining a height h of the side (6) measured in parallel with the axis of rotation (5) of the milling cutter (1),
• selecting a milling cutter (1) having values of α, β and R such that the following equation is satisfied:

$$\frac{tg(\beta)}{R\,\alpha} = \frac{integer}{h}$$

**2.** Method according to claim 1, wherein the number M of cutting edges (3) of the milling cutter (1) is between 1 and 10.

**3.** Method according to claim 2, wherein the number M of cutting edges (3) of the milling cutter (1) is between 2 and 6.

**4.** Method according to any of claims 1 to 3, wherein the helix angle β is between 10° and 80°.

**5.** Method according to claim 4, wherein the helix angle β is between 20° and 70°.

**6.** Milling arrangement comprising a milling cutter (1) and a part (4), said milling cutter (1) permitting lateral milling of said part (4), said milling cutter (1) comprising:

> • a cylinder (2) having a circular cross section of radius R and having an axis of rotation (5),
> • a plurality of cutting edges (3) in a number M, arranged along parallel helical lines extending along an outer surface of the cylinder (2), the edges (3) defining, together with the direction of the axis (5) of the cylinder, a helix angle β, the edges (3) enclosing constant angles α in a plane that is perpendicular to the axis (5) such that α=2π/M,

said part (4) having a side (6) facing said milling cutter (1) that has a height h measured in parallel with the axis (5) of the cylinder (2) of the milling cutter (1), **characterised in that** the values of α, β and R satisfy the following equation:

$$\frac{tg(\beta)}{R\,\alpha} = \frac{integer}{h}$$

**7.** Milling arrangement according to claim 6, wherein the number M of cutting edges (3) of the milling cutter (1) is between 1 and 10.

**8.** Milling arrangement according to claim 7, wherein the number M of cutting edges (3) of the milling cutter (1) is between 2 and 6.

**9.** Milling arrangement according to any of claims 6 to 8, wherein the helix angle β is between 10° and 80°.

**10.** Milling arrangement according to claim 9, wherein the helix angle β is between 20° and 70°.

**11.** Milling arrangement according to any of claims 6 to 10, wherein the side (6) of the part (4) facing the milling cutter (1) is substantially planar.

**12.** Milling arrangement according to any of claims 6 to 11, wherein the side (6) of the part (4) facing the milling cutter (1) is parallel to the axis (5).

*Fig.1*

*Fig.2*

**_Fig.3_**

EP 3 195 969 B1

**EP 3 195 969 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20110217132 A1